# EUROPÄISCHE PATENTANMELDUNG

(11) **EP 1 577 649 A1**
(43) Veröffentlichungstag der Anmeldung: **21.09.2005**
(21) Anmeldenummer: 04006653.2
(22) Anmeldetag: 19.03.2004
(51) Int. Cl.: G01D 11/24

(54) **Modularer aufgebauter Sensor mit Modulen für Erfassung, Bedienung, Anzeige und Kommunikation**

(71) Anmelder: FESTO AG & Co, 73734 Esslingen (DE)
(72) Erfinder: Wagner, Dietmar, 73230 Kirchheim u. Teck (DE)
(74) Vertreter: Vetter, Hans

(57) **Zusammenfassung**

Es wird eine Messwert-Kommunikationseinrichtung mit einem Gehäuse (10) in einer baukastenartigen Ausgestaltung vorgeschlagen, wobei das Gehäuse (10) Bestückungsplätze zur Bestückung mit einem Messwerterfassungsmodul (11), einem Bedien- und/oder Anzeigemodul (13) sowie einem Schnittstellenmodul (12) aufweist. An Verbindungsstellen zwischen Bestückungsplätzen sind Schnittstellen (22, 24, 25, 32) zur elektrischen Verbindung der Module (11-13) vorgesehen. Wenigstens ein Teil der Bestückungsplätze ist zur Bestückung mit unterschiedlichen Modulen (11-13) der jeweiligen Art ausgebildet, sodass in einfacher Weise die Messwert-Kommunikationseinrichtung sehr variabel konfigurierbar und an Kundenwünsche anpassbar ist.

## Beschreibung

Die Erfindung betrifft eine Messwert-Kommunikationseinrichtung mit einem Gehäuse, das eine Messwerterfassungseinrichtung, eine Bedien- und/oder Anzeigevorrichtung und eine Ausgangsschnittstelle zur Kommunikation mit einer externen Steuereinrichtung besitzt.

Eine derartige, als elektronisches Auswertegerät bezeichnete Einrichtung ist aus der DE 19755924 C2 bekannt. Sie dient zur Erfassung und Überwachung von Impulsen, also zu einem ganz bestimmten Zweck, und kann für nichts anderes eingesetzt werden, es sei denn, es würde eine vollständige Umkonstruktion vorgenommen.

Eine Aufgabe der vorliegenden Erfindung besteht darin, eine Kommunikationseinrichtung zu schaffen, die auf einfache Weise kundenindividuell konfigurierbar ist und für eine Vielzahl unterschiedlicher Anwendungen eingesetzt werden kann.

Diese Aufgabe wird erfindungsgemäß dadurch gelöst, dass in einer baukastenartigen Ausgestaltung das Gehäuse Bestückungsplätze zur Bestückung mit einem Messwerterfassungsmodul, einem Bedien- und/oder Anzeigemodul sowie einem Schnittstellenmodul aufweist, dass an Verbindungsstellen zwischen Bestückungsplätzen Schnittstellen zur elektrischen Verbindung von solchen Modulen vorgesehen sind und dass wenigstens ein Teil der Bestückungsplätze zur Bestückung mit unterschiedlichen Modulen der jeweiligen Art ausgebildet ist.

Der Vorteil der erfindungsgemäßen Messwert-Kommunikationseinrichtung besteht insbesondere darin, dass sie in einfacher Weise baukastenartig konfigurierbar ist, das heißt, je nach Kundenwunsch kann das Gehäuse mit einem von mehreren Messwerterfassungsmodulen, mit einem von mehreren Bedien-und/oder Anzeigemodulen sowie mit einem von mehreren Schnittstellenmodulen bestückt werden, wobei die Einrichtung je nach Bestückung für unterschiedliche Messzwecke eingesetzt werden kann. Dabei kann immer dasselbe Gehäuse verwendet werden, das heißt, bei großer Variabilität ist der Lageraufwand relativ gering, da aus relativ wenigen Grundmodulen eine sehr variable Einrichtung konfiguriert werden kann. Diese Messwert-Kommunikationseinrichtung kann im Bereich des Messorts angeordnet werden, sodass dort bei Bedarf die Messwerte abgelesen und Einstellungen und Parametrierungen vorgenommen werden können. Durch die Möglichkeit der Bestückung durch unterschiedliche Messwerterfassungsmodule und unterschiedliche Schnittstellenmodule können sehr viele verschiedene Arten der Signalübertragung und Messwerterfassung realisiert werden.

Durch die in den Unteransprüchen aufgeführten Maßnahmen sind vorteilhafte Weiterbildungen und Verbesserungen der im Anspruch 1 angegebenen Messwert-Kommunikationseinrichtung möglich.

Die Schnittstellen zwischen den Modulen sind zweckmäßigerweise als Steckverbindungen, Federkontaktverbindungen, Leitplastikverbindungen und/oder Verbindungszwischenstücke ausgebildet, sodass die erforderlichen elektrischen Verbindungen zwischen den Modulen automatisch bei der Bestückung hergestellt werden.

Die unterschiedlichen Module der jeweiligen Art besitzen im Wesentlichen gleiche Abmessungen, sodass für die variable Bestückung nicht nur dieselbe Gehäusegröße, sondern auch die gleiche Gehäuseausführung gewählt werden kann.

Das wenigstens eine Messwerterfassungsmodul enthält in einer ersten Variante mindestens einen Messwertsensor und besitzt Anschlüsse für elektrische, optische oder fluidische Leitungen, über die der interne Messwertsensor mit dem Messort verbindbar ist. Alternativ hierzu kann der Messwertsensor auch extern angeordnet sein, wobei dann das Messwerterfassungsmodul Anschlüsse für elektrische, optische oder fluidische Sensorleitungen besitzt, über die die Sensorsignale dem Messwerterfassungsmodul zuführbar sind. Das Messwerterfassungsmodul besitzt dabei zweckmäßigerweise Signalaufbereitüngsmittel für die Sensorsignale.

Das wenigstens eine Bedien- und/oder Anzeigemodul ist in vorteilhafter Weise als Abdeckung für eine Stirnseite des Gehäuses ausgebildet und besitzt Schnittstellen zu den anderen Modulen. Hierdurch kann das Gehäuse nach der Bestückung mit einem Messwerterfassungsmodul und einem Schnittstellenmodul durch das Bedien- und/oder Anzeigemodul abgedeckt und verschlossen werden.

Das wenigstens eine Bedien- und/oder Anzeigemodul enthält in vorteilhafter Weise einen Mikrocontroller zur Messwertsignalübertragung und/oder Messwertumsetzung und/oder Messwertauswertung, wobei in einer vorteilhaften Variante Bedientasten zur Konfigurierung vorgesehen sind.

Der Mikrocontroller kann zusätzlich zum Betrieb eines Displays am Bedien- und/oder Anzeigemodul dienen.

Das wenigstens eine Schnittstellenmodul besitzt in vorteilhafter Weise je nach Kundenwunsch eine Spannungsversorgungseinrichtung und/oder eine Verpolschutzeinrichtung und/oder eine EMV-Schutzeinrichtung und/oder einen Schaltausgang und/oder einen Analogausgang.

Das Schnittstellenmodul und/oder das Messwerterfassungsmodul ist wahlweise mit unterschiedlichen Steckverbindungs-, Kabel-oder Schraubverbindungsanschlüssen versehen.

In einer bevorzugten konstruktiven Ausgestaltung besitzt jedes Modul mindestens eine Leiterplatte, wobei die internen Schnittstellen zur Verbindung der Leiterplatten miteinander ausgebildet sind.

Das Gehäuse ist zweckmäßigerweise mit Vorrichtungen zur Hutschienenmontage versehen, damit das Gehäuse oder eine Reihe von Gehäusen an Hutschienen aufreihbar sind.

Die in die Bestückungsplätze eingesetzten Module sind bevorzugt durch Ultraschall- oder Laserschweißverbindungen im Gehäuse fixiert, wobei wenigstens das Bedien- und/oder Anzeigemodul mit dem Gehäuse verschweißt ist.

Ausführungsbeispiele der Erfindung sind in der Zeichnung dargestellt und in der nachfolgenden Beschreibung näher erläutert. Es zeigen:
- Fig. 1: die Einzelteile einer Messwert-Kommunikationseinrichtung gemäß einem Ausführungsbeispiel der Erfindung in einer Explosionsdarstellung,
- Fig. 2: dieselbe Messwert-Kommunikationseinrichtung im zusammengebauten Zustand und
- Fig. 3: eine geringfügig abgewandelte Ausführungsform einer Messwert-Kommunikationseinrichtung in der perspektivischen Darstellung.

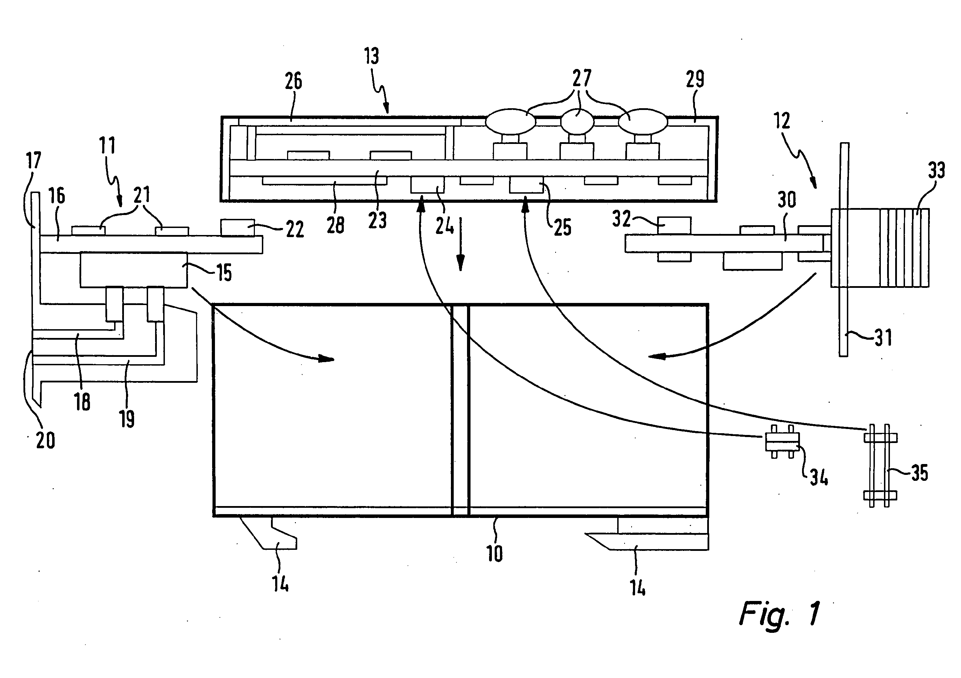

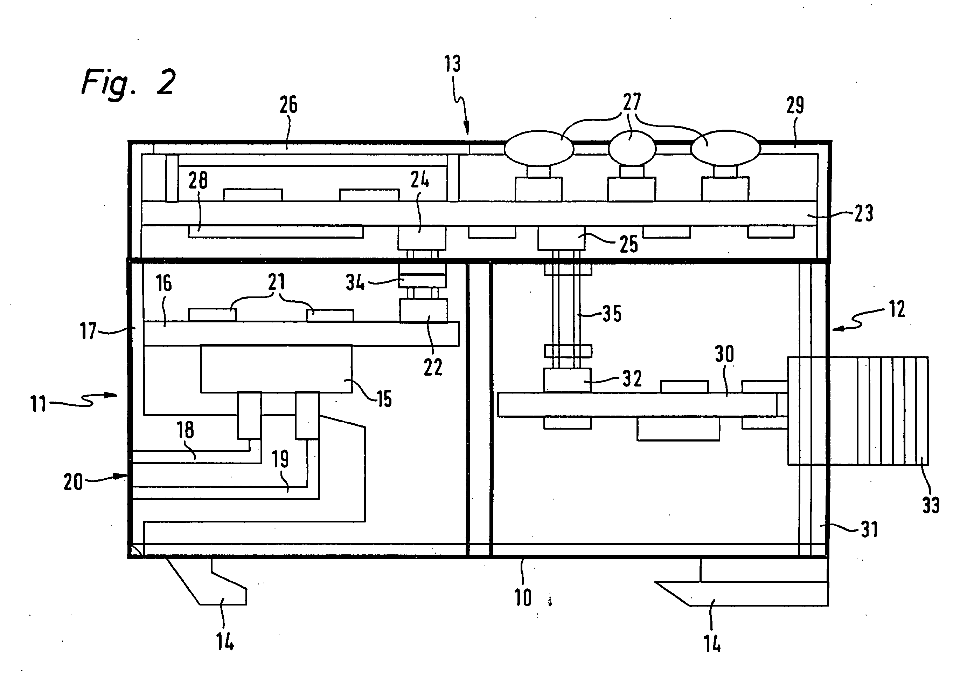

Das in den Fig. 1 und 2 dargestellte Ausführungsbeispiel einer Messwert-Kommunikationseinrichtung besteht im Wesentlichen aus einem Gehäuse 10, das beim Ausführungsbeispiel als Flachgehäuse ausgebildet ist. Die in den Fig. 1 und 2 dargestellte Seite dieses Gehäuses 10 stellt dabei eine Flachseite dar. In dieses Gehäuse 10 wird durch eine entsprechende Ausnehmung an der gemäß der Darstellung linken Schmalseite ein Messwerterfassungsmodul 11 und durch eine Ausnehmung an der rechten Schmalseite ein Schnittstellenmodul 12 eingesetzt. Die obere, offene Schmalseite wird durch ein Bedien- und Anzeigemodul 13 abgedeckt, indem dieses aufgesteckt wird. Nach dem Ein- bzw. Aufsetzen der Module 11-13 werden diese mit dem Gehäuse 10 verschweißt oder verklebt, wozu sich vor allem das Ultraschall- oder Laserschweißen eignet.

Das Gehäuse 10 ist mit Befestigungsmitteln 14 an der dem Bedien- und Anzeigemodul 13 gegenüberliegenden Schmalseite versehen, die zur Montage an Hutschienen dienen. Auf diese Weise können beispielsweise mehrere gleich oder unterschiedlich konfigurierte Messwert-Kommunikationseinrichtungen auf einer Hutschiene in einer Reihenanordnung befestigt werden.

Das Messwerterfassungsmodul 11 besitzt eine mit einem Differenzdrucksensor 15 versehene Platine 16, die an einer Wandabschlussplatte 17 fixiert ist. Vom Differenzdrucksensor 15 aus verlaufen zwei Fluidleitungen 18, 19 zu einer äußeren Anschlussstelle 20 an der Wandabschlussplatte 17, an die externe, zum Messort geführte Fluidleitungen angesteckt, angeschraubt oder auf sonstige Weise verbunden werden können. Die Platine 16 ist mit Signalaufbereitungsmitteln 21 zur Aufbereitung der Messsignale bestückt und besitzt eine Schnittstelle 22 zur Herstellung einer elektrischen Verbindung mit dem Bedien- und Anzeigemodul 13.

Anstelle des beschriebenen Messwerterfassungsmoduls 11 können baukastenartig auch beliebige andere Messwerterfassungsmodule ins Gehäuse 10 an dem entsprechenden Bestückungsplatz eingesetzt werden, die lediglich geometrisch so ähnlich aufgebaut sein müssen, dass eine entsprechende Wandabschlussplatte 17 und eine Schnittstelle 22 am entsprechenden Ort vorgesehen sein müssen. Solche alternativ einsetzbaren Messwerterfassungsmodule können beispielsweise Durchflusssensoren, Relativdrucksensoren oder dergleichen in ein- oder mehrfachen Ausführungen enthalten. Die Platine 16 sorgt dabei bei Bedarf für die notwendige Spannungsversorgung des oder der jeweiligen Sensoren. Weiterhin können solche Messwerterfassungsmodule auch verschiedene Anschlussstellen besitzen, die je nach Kundenwunsch ausgeführt sein können.

In einer alternativen Ausgestaltung solcher in das Gehäuse 10 einsetzbarer Messwertmodule können diese auch ohne internen Sensor ausgestaltet sein. Der jeweilige Sensor befindet sich dann am Messort, und die Signalübertragung erfolgt optisch oder elektrisch über die Anschlussstelle 20 zur Platine 16, die dann wiederum entsprechende Signalaufbereitungsmittel und bei Bedarf eine Stromversorgungseinrichtung für den oder die jeweiligen Sensoren besitzt. Bei diesen externen Sensoren kann es sich wiederum um Drucksensoren oder Durchflusssensoren handeln, jedoch können auch beliebige andere Sensoren, wie Positionssensoren, Temperatursensoren oder andere bekannte Sensoren, vorgesehen sein. Als Anschlussstelle 20 können bekannte elektrische oder optische Verbindungseinrichtungen mit einer variablen Anzahl von Kontakten wahlweise vorgesehen sein.

Das Bedien- und Anzeigemodul 13 ist ebenfalls mit einer Platine 23 versehen, die zwei Schnittstellen 24, 25 zur elektrischen Verbindung mit dem Messwerterfassungsmodul 11 und dem Schnittstellenmodul 12 besitzt. An der Außenseite besitzt das Bedien- und Anzeigemodul 13 ein Display 26 sowie Bedienungselemente 27 zur Parametrierung und/oder Programmierung der Messvorgänge sowie zur Steuerung und Einstellung des Displays 26. In einer einfacheren Ausführung kann auch das Display 26 und/oder die Bedienungselemente 27 entfallen.

Die Platine 23 besitzt zur Durchführung der genannten Vorgänge einen Mikrocontroller 28 sowie sonstige dafür erforderliche Bauteile und Baugruppen. Weiterhin kann auch eine zusätzliche Schnittstelle zur externen Programmierung beispielsweise mittels eines Laptops vorgesehen sein. Anstelle eines Displays 26 können auch einfachere Anzeigemittel, wie beispielsweise Leuchtdioden, treten.

Auch im Hinblick des Bedien- oder Anzeigemoduls 13 kann die Messwert-Kommunikationseinrichtung sehr variabel konfiguriert werden, indem unterschiedliche Bedien- und/oder Anzeigemodule 13 am entsprechenden Bestückungsplatz angebracht werden können. Auch hier ist es lediglich erforderlich, dass solche Bedien- und Anzeigemodule 13 entsprechende, zum Verschließen des Gehäuses 10 dienende deckelartige Gehäuseabschlusselemente 29 besitzen. Weiterhin müssen die Schnittstellen 24, 25 an den entsprechenden Stellen angeordnet sein, um ein Zusammenstecken der Module zu gewährleisten.

Das Schnittstellenmodul 12 besteht wiederum im Wesentlichen aus einer Platine 30, die an einer Wandabschlussplatte 31 fixiert ist, wobei die Wandabschlussplatte 31 zum Verschließen einer Gehäuseöffnung an der in den Figuren rechten Schmalseite des Gehäuses 10 dient. Die Platine 30 ist mit einer Schnittstelle 32 versehen, die zur elektrischen Verbindung mit der Schnittstelle 25 des Bedien- und Anzeigemoduls 13 dient. Weiterhin ist an der Wandabschlussplatte 31 ein Anschlusselement 33 angeordnet, das zur Verbindung mit einer externen zentralen Steuereinrichtung dient, zu der die Messdaten bzw. Sensordaten übertragen werden sollen. Wie schon zu den anderen Modulen erläutert, kann auch das Schnittstellenmodul 12 durch andere Schnittstellenmodule ersetzt werden, die zwar anders konfiguriert sind, die jedoch dieselbe Wandabschlussplatte 31 und eine an derselben Stelle angeordnete Schnittstelle 32 besitzen. Diese Schnittstellenmodule können bezüglich der Art des Anschlusselements 33 und der Bestückung der Platine 30 variieren. Beim Anschlusselement 33 kann es sich wiederum um ein optisches oder elektrisches Anschlusselement 33 handeln, wobei alle bekannten Variationen möglich sind. Die Bestückung der Platine 30 kann eine Spannungsversorgungseinrichtung und/oder eine Verpolschutzeinrichtung und/oder eine EMV-Schutzeinrichtung und/oder Schaltmittel zur Bildung eines Schaltausgangs oder Signalumformmittel zur Bildung eines Analogausgangs enthalten. Die Messsignale werden dem Schnittstellenmodul 12 vom Messwerterfassungsmodul 11 über das Bedien- und Anzeigemodul 13 übertragen, wobei prinzipiell auch eine direkte Übertragung vom Messwerterfassungsmodul 11 denkbar ist.

Die internen Schnittstellen 22, 24, 25, 32 können als Steckverbindungen, Federkontaktverbindungen oder Leitplastikverbindungen ausgebildet sein. Je nach geometrischer Ausgestaltung können Verbindungszwischenstücke 34, 35 vorgesehen sein, wobei beim Ausführungsbeispiel das kürzere Verbindungszwischenstück 34 zur Verbindung der Schnittstellen 22, 24 miteinander und das länger Verbindungszwischenstück 35 zur Verbindung der Schnittstellen 25, 32 dient. Die Verwendung von Zwischenstücken ermöglicht es, dass die miteinander zu verbindenden Schnittstellen zwar miteinander fluchtend angeordnet sein sollten, dass jedoch ihr Abstand unterschiedlich sein kann. Dies vergrößert die geometrischen variationsmöglichkeiten der zu bestückenden Module.

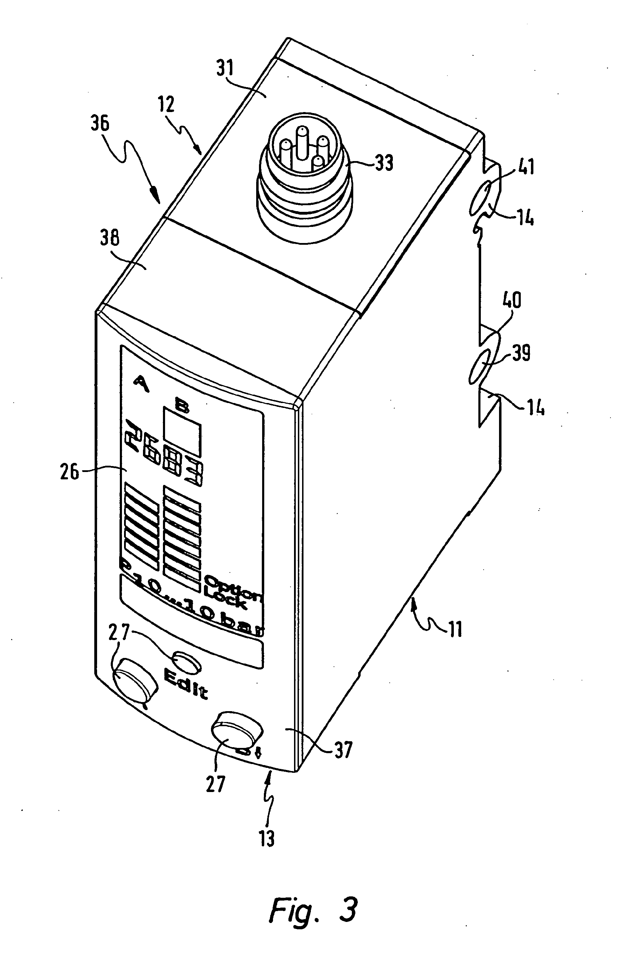

In Fig. 3 ist als weiteres Ausführungsbeispiel eine modifizierte Messwert-Kommunikationseinrichtung perspektivisch in der Außenansicht mit eingesetzten Modulen dargestellt. Gleiche oder gleichwirkende Bauteile, Baugruppen und Einzelteile sind mit denselben Bezugszeichen versehen und nicht nochmals beschrieben.

Ein modifiziertes Gehäuse 36 ist ebenfalls als Flachgehäuse ausgebildet. Ein modifiziertes Bedien- und Anzeigemodul 13 besitzt ein Gehäuseabschlusselement 37 mit verringerter Höhe, das wiederum mit dem Display 26 und Bedienungselementen 27 versehen ist. Das Gehäuse 36 besitzt infolge dieser verringerten Höhe einen festen Wandbereich 38 zwischen dem Gehäuseabschlusselement 37 und der Wandabschlussplatte 31 des Schnittstellenmoduls 12. Dieses ist bei dieser Ausführung auf der Displayseite des Bedien- und Anzeigemoduls 13 angeordnet. Zwischen den beiden hakenartigen Befestigungsmitteln 14 zur Befestigung des Gehäuses 36 an einer Hutschiene ist ein weiterer, mit einem Durchgangsloch 39 versehener Vorsprung 40 angeordnet. Auch der eine der beiden hakenartigen Befestigungsmittel 14 ist mit einem solchen Durchgangsloch 41 versehen. Die Durchgangslöcher 39, 41 dienen zur zusätzlichen Fixierung von Gehäusen 36 bzw. 10 aneinander auch für den Fall der Fixierung an einer Hutschiene, oder zur einzelnen seitlichen Montage an einer Befestigungsfläche (Flächenmontage).

## Patentansprüche

1. Messwert-Kommunikationseinrichtung mit einem Gehäuse, das eine Messwerterfassungseinrichtung, eine Bedien- und/oder Anzeigevorrichtung und eine Ausgangsschnittstelle zur Kommunikation mit einer externen Steuereinrichtung besitzt, **dadurch gekennzeichnet, dass** in einer baukastenartigen Ausgestaltung das Gehäuse (10; 36) Bestückungsplätze zur Bestückung mit einem Messwerterfassungsmodul (11), einem Bedien-und/oder Anzeigemodul (13) sowie einem Schnittstellenmodul aufweist, dass an Verbindungsstellen zwischen Bestückungsplätzen Schnittstellen (22, 24, 25, 32) zur elektrischen Verbindung von solchen Modulen (11-13) vorgesehen sind und dass wenigstens ein Teil der Bestückungsplätze zur Bestückung mit unterschiedlichen Modulen (11-13) der jeweiligen Art ausgebildet ist.

2. Messwert-Kommunikationseinrichtung nach Anspruch 1, **dadurch gekennzeichnet, dass** die Schnittstellen (22, 24, 25, 32) als Steckverbindungen, Federkontaktverbindungen oder Leitplastikverbindungen ausgebildet sind, wobei vorzugsweise Verbindungszwischenstücke (34, 35) vorgesehen sind.

3. Messwert-Kommunikationseinrichtung nach Anspruch 1 oder 2, **dadurch gekennzeichnet, dass** die unterschiedlichen Module (11-13) der jeweiligen Art im Wesentlichen gleiche Abmessungen besitzen.

4. Messwert-Kommunikationseinrichtung nach einem der vorhergehenden Ansprüche, **dadurch gekennzeichnet, dass** wenigstens ein Messwerterfassungsmodul (11) mindestens einen Messwertsensor (15) enthält und Anschlüsse (20) für elektrische, optische oder fluidische Leitungen besitzt, über die der Messwertsensor (15) mit dem Messort verbindbar ist.

5. Messwert-Kommunikationseinrichtung nach einem der Ansprüche 1 bis 3, **dadurch gekennzeichnet, dass** das wenigstens eine Messwerterfassungsmodul Anschlüsse für elektrische, optische oder fluidische Sensorleitungen besitzt, über die die Sensorsignale dem Messwerterfassungsmodul zuführbar sind.

6. Messwert-Kommunikationseinrichtung nach Anspruch 4 oder 5, **dadurch gekennzeichnet, dass** das Messwerterfassungsmodul (11) Signalaufbereitungsmittel enthält.

7. Messwert-Kommunikationseinrichtung nach einem der vorhergehenden Ansprüche, **dadurch gekennzeichnet, dass** wenigstens ein Bedien- und/oder Anzeigemodul (13) als Abdeckung für eine Stirnseite des Gehäuses (10; 36) ausgebildet ist und Schnittstellen (24, 25) zu den anderen Modulen (11, 12) besitzt.

8. Messwert-Kommunikationseinrichtung nach einem der vorhergehenden Ansprüche, **dadurch gekennzeichnet, dass** wenigstens ein Bedien- und/oder Anzeigemodul (13) einen Mikrocontroller zur Messwertsignalübertragung und/oder Messwertumsetzung und/oder Messwertauswertung enthält und vorzugsweise mittels Bedientasten oder anderen Bedienungselementen (27) konfigurierbar ist.

9. Messwert-Kommunikationseinrichtung nach einem der vorhergehenden Ansprüche, **dadurch gekennzeichnet, dass** wenigstens ein Schnittstellenmodul (12) eine Spannungsversorgungseinrichtung und/oder eine Verpolschutzeinrichtung und/oder eine EMV-Schutzeinrichtung und/oder einen Schaltausgang und/oder einen Analogausgang besitzt

10. Messwert-Kommunikationseinrichtung nach Anspruch 9, **dadurch gekennzeichnet, dass** das Schnittstellenmodul (12) und/oder das Messwerterfassungsmodul (11) mit unterschiedlichen Steck- oder Schraubverbindungsanschlüssen oder Kabelanschlüssen ausrüstbar ist.

11. Messwert-Kommunikationseinrichtung nach einem der vorhergehenden Ansprüche, **dadurch gekennzeichnet, dass** jedes Modul (11-13) mindestens eine Leiterplatte (16, 23, 30) besitzt, und dass die internen Schnittstellen (22, 24, 25, 32) zur Verbindung der Leiterplatten (16, 23, 30) untereinander ausgebildet sind.

12. Messwert-Kommunikationseinrichtung nach einem der vorhergehenden Ansprüche, **dadurch gekennzeichnet, dass** das Gehäuse (10; 36) mit Vorrichtungen (14) zur Hutschienenmontage oder Flächenmontage versehen ist.

13. Messwert-Kommunikationseinrichtung nach einem der vorhergehenden Ansprüche, **dadurch gekennzeichnet, dass** die in die Bestückungsplätze eingesetzten Module (11-13) durch Ultraschall- oder Laserschweißverbindungen im Gehäuse (10; 36) fixiert sind, wobei wenigstens das Bedien- und/oder Anzeigemodul (13) mit dem Gehäuse (10; 36) verschweißt ist.
